# EUROPEAN PATENT SPECIFICATION

(11) **EP 3 091 857 B1**
(45) Date of publication and mention of the grant of the patent: **09.08.2017**
(21) Application number: 14776641.4
(22) Date of filing: 25.09.2014
(51) Int. Cl.: A23L 27/26, A23L 27/21, A23K 20/142

(54) **COMPOSITIONS WITH A BEEF FLAVOUR AND PRODUCTION THEREOF**
ZUSAMMENSETZUNGEN MIT EINEM RINDFLEISCHGESCHMACK UND HERSTELLUNG DAVON
COMPOSITIONS À SAVEUR DE BOEUF ET SON PROCÉDÉ DE PRODUCTION

(30) Priority: 27.09.2013 EP 13186457
(43) Date of publication of application: 16.11.2016
(73) Proprietor: DSM IP Assets B.V., 6411 TE Heerlen (NL)
(72) Inventor: GROENEWOLD, Mirjam Tabitha, NL-6100 AA Echt (NL)
(74) Representative: Kuster, Janaart Frans
(86) International application number: PCT/EP2014/070555
(87) International publication number: WO 2015/044300

(56) References cited:
- EP-A1- 0 784 936
- EP-A1- 1 142 490
- WO-A1-2010/037783
- US-A- 4 879 130

## Description

### Field of the invention

This invention relates to a method for producing a composition with a boiled beef flavour using extrusion and to the compositions obtainable by this method and to their use in the flavouring of food products.

### Background of the invention

The flavour of beef is the result of a complex combination of different reaction pathways occurring during cooking. The Maillard reaction between amino acids and reducing sugars, the related Strecker degradation of amino acids in presence of Maillard-derived dicarbonyl compounds and the auto-oxidation of lipids are the most important examples. All these reactions, their products and their influence on the taste of food have been the subject of several studies (Motram D.S., (1998) Food Chemistry, 62, pp. 415-424, "Flavour formation in beef and beef products: a review" and references therein; Schrödter, R., Schliemann, R., Woelm, G., (1988) Tech. Charact. Prod. Appl. Food Flavours, pp. 107-114, "Study on the effect of fat in beef flavour formation"). In particular it has been found that lipids, especially those rich in polyunsaturated fatty acids, play a major role in determining the special taste of the different beef species. Saturated and unsaturated aldehydes, which are a major lipid-degradation product, are found in high concentrations between the volatiles of cooked beef and they have been shown to participate in reactions with Maillard intermediates. This interaction seems to have a beneficial effect on the taste of beef.

Combinations of Maillard reactions with lipid oxidations have been exploited in the art to produce or enhance beef flavours. In EP-B-0136428 a process is described for preparing a flavorant for imparting a cooked beef or fish flavour to foodstuffs, said process comprising combining oxidized lipid material with a sulfur-containing compound and reacting the mixture by heating.

4-Hydroxy-2,5-dimethyl-3(2H)-furanone has been associated in the art with the production of beef flavour. GB-1283913 to Unilever (1969) discloses in Example 2 that a roast beef flavour can be formed by refluxing a solution comprising 4-Hydroxy-2,5-dimethyl-3(2H)-furanone and sodium sulphide in an acetate buffer for 30 minutes at pH=5. The temperature is the cooking temperature of the composition which is around 100°C.

Extrusion technology is such a single step process and may be used for the production of process flavours. The principle of extrusion technology is that a composition comprising selected compounds and low water content (e.g. <20 wt%) is mixed and heated and extruded in an extruder at elevated temperatures for short periods of time. The desired flavour formation takes place during the heating step in the extruder. Extrusion differs from the technology where the composition comprising selected compounds and with a higher water content (e.g. >40 wt%) is refluxed at the boiling temperature of the composition such as disclosed in WO03/051139. Major advantages of the extrusion technology in comparison with the reflux technology or classical oven heating technology are the ease of operation, the reproducibility of the process, the homogeneity of the final product as well as its stability. The extruded product leaves the extruder and is subsequently cooled, the melt may solidify to form a solid state, also referred to as a "glassy state" (WO2010/037783). Such a glassy state may be physically and chemically stable. The individual components of a glassy state product may be no longer distinguishable or separable after extrusion and may therefore advantageously not separate upon storage for prolonged time, e.g. for more than a week or more than a month. A glassy state may limit or inhibit oxygen diffusion and therefore reduces the oxidation of the flavour.

US 4,879,130 in the name of Nestec discloses that flavouring agents may be obtained after plasticizing and extruding a composition comprising 70-95 wt% of a source of amino acids such as hydrolysed vegetable, microbial or animal protein, 0.5-10 wt% of a reducing sugar, 0.5-10% of a sulphur compound and 5-10% added water at a temperature of 80-140°C during 3 seconds - 30 minutes. Examples described in US 4,879,130 are cooked beef and roast chicken. A cooked beef flavour (Example 2) was obtained by extruding a mixture comprising 53% acid-hydrolysed nut cake, 26% yeast extract, 6% monosodium glutamate, 1,3% sodium chloride and 1,2% thiamine and a glucose syrup.

WO2007/073945 in the name of DSM IP Assets B.V. discloses that a dark roast beef flavour may be obtained by extruding a composition comprising yeast extract, glucose, water and sunflower oil in a twin-screw extruder at 165°C during 1 hour. WO2010/037783 in the name of DSM IP Assets B.V. discloses that a roast chicken flavour may be obtained by extruding a composition comprising yeast extract, glutathione, water and sunflower oil in a twin-screw extruder at 175-180°C during 1 minute. Other examples are dark roast beef (WO2007/073945), fish flavour (WO2010/046313) and concentrated vegetable flavours (WO2011/042499). EP-A-1142490 in the name of Quest International B.V. discloses a method for preparing 4-methyl-2-(3H)-thiazolone, described as having boiled beef notes. The production of a boiled beef flavour from a composition comprising cysteine, reducing sugar and 4-hydroxy-2,5-dimethyl-3(2H)-furanone by extrusion technology has not been reported before. It is therefore the purpose of the present invention to provide compositions with a boiled beef flavour which are stable in time and which are produced in a single step process using extrusion technology.

### Definitions

"**Yeast**" is defined herein as a solid, paste or liquid composition comprising yeast cells. Examples of liquid compositions are a fermentation broth used for the production of yeast or cream yeast as used in the baking industry and which is a suspension of yeast cells. Cream yeast may have a yeast dry matter between 20-25% or even higher. Liquid compositions having other yeast dry matter contents may be used as well such as 6-20% or 14-18%. Examples of solid compositions are active dried yeast (ADY) or instant dried yeast (IDY) having yeast dry matter contents of at least 90%. An example of a paste like product is compressed yeast having a yeast dry matter between 30 and 40%.

"**Autolysis**" is defined herein as the enzymatic breakdown of yeast using endogenous yeast enzymes and optionally exogenous added enzymes. Autolysis may result in both a yeast autolysate and a yeast extract (see definitions below)

"**Hydrolysis**" is defined herein to the enzymatic breakdown of yeast using only exogenous enzymes. The endogenous yeast enzymes are first inactivated for instance by a heat shock. Hydrolysis may also result in both a yeast autolysate and a yeast extract (see definitions below).

"**Yeast autolysate**" is the concentrated, not extracted, partially soluble digest obtained from food-grade yeasts. Solubilization is accomplished by enzyme hydrolysis or autolysis of yeast cells. Yeast autolysate contains both soluble and insoluble components derived from the whole yeast cell (Food Chemical Codex).

"**Yeast extract**" comprises only the water soluble components of the yeast cell, the composition of which is primarily amino-acids, peptides, carbohydrates and salts. Yeast Extract is produced through the hydrolysis of peptide bonds by the naturally occurring enzymes present in edible yeast and/or or by the addition of food-grade enzymes (Food Chemical Codex), i.e. by autolysis or hydrolysis.

The term "**between**" used in defining numerical ranges is meant herein to include the values of the ranges indicated, for instance, between 1 and 10 wt% means that the water content of the composition is equal to and greater than 1 wt% and equal to or smaller than 10 wt%.

### Detailed description of the invention

In a first aspect the invention provides a process for the production of a boiled beef flavour comprising heating a composition comprising a reducing sugar and cysteine and 4-hydroxy-2,5-dimethyl-3(2H)-furanone, wherein, or characterized in that, the composition is heated and extruded in an extruder at a temperature between 80°C and 140°C. It has surprisingly been found that a composition comprising at least these three compounds (reducing sugar/cysteine/ 4-hydroxy-2,5-dimethyl-3(2H)-furanone), under mild extrusion conditions with respect to the temperature, is able to give a boiled beef flavour upon heating and extruding. The three components may be present in the composition between 10 and 100% of the weight of the composition. Heating and extruding a composition comprising the three compounds (reducing sugar/cysteine/4-hydroxy-2,5-dimethyl-3(2H)-furanone) is giving a boiled beef flavour as is illustrated by the Examples. The skilled person may, without undue burden determine the concentrations of the three compounds (reducing sugar/cysteine/4-hydroxy-2,5-dimethyl-3(2H)-furanone) in the composition in order to give the desired boiled beef flavour in terms of flavour profile and intensity. Generally, the reducing sugar and cysteine may be present in the composition in a molar ratio comprised between 1.5 and 2.5, more preferably comprised between 1.7 and 2.3, more preferably between 1.9 and 2.1.

In the composition comprising the three compounds (reducing sugar/cysteine/4-hydroxy-2,5-dimethyl-3(2H)-furanone) the sugar may be present between 50 and 70 wt% and preferably between 55 and 66 wt%. The cysteine may be present between 20 and 40 wt% and preferably between 25 and 35 wt%. The 4-hydroxy-2,5-dimethyl-3(2H)-furanone may be present between 0.4 and 5 wt% and preferably between 1 and 4.5 wt%, and preferably between 1.5 and 4.0 wt%, and preferably between 2 and 3.5 wt%, more preferably between 2.5 and 3.0 wt%.

The reducing sugar is preferably a monosaccharide and preferably ribose, xylose, glucose (also known as dextrose), arabinose, rhamnose and/or fructose. More preferably the reducing sugar is glucose. For the development of the boiled beef flavour, the D, L or D, L forms of the sugars may be used. The present invention does not exclude the possibility of combining more than one reducing sugar. In the latter case, hydrolysates obtained from the chemical or enzymatic degradation of polysaccharides can be used as source of reducing sugars.

The cysteine used in the process of the invention may be L-cysteine, in the form of L-cysteine free base, L-cysteine hydrochloride anhydrous or L-cysteine hydrochloride monohydrate. All these forms are commercially available.

It may be advantageous to add other compounds in addition to the three compounds (reducing sugar/cysteine/4-hydroxy-2,5-dimethyl-3(2H)-furanone). In one embodiment, the composition comprises further a yeast extract or a yeast autolysate, or a protein hydrolysate or any combination thereof.

Protein hydrolysates are defined herein as acid or enzymatically treated protein substrates containing mixtures of amino acids and peptides in varying proportions that are determined by the degree of hydrolysis and/or the type of enzymes used. Typical protein substrates for the preparation of protein hydrolysates are vegetable proteins such as wheat gluten, corn gluten, soy protein, rape seed protein, pea protein, alfalfa protein, sunflower protein, fabaceous bean protein, cotton or sesame seed protein, maize protein, barley protein, sorghum protein, potato protein, rice protein, coffee proteins. Other possible protein substrates are animal proteins such as milk protein (e.g. casein, whey protein), egg white, fish protein, beef protein including gelatin, collagen, blood protein (e.g. haemoglobin), hair, feathers and fish meal.

The addition of a yeast extract or yeast autolysate, a protein hydrolysate or any combination thereof results in other amino acids to be present in the composition in addition to cysteine. The advantage is that when also other amino acids are present, a flavour of better quality is obtained. In a preferred embodiment, the composition comprises further a yeast extract or yeast autolysate or any combination thereof.

In a highly preferred embodiment the composition used in the process of the invention comprises at least the four components:
1. a reducing sugar,
2. cysteine,
3. 4-hydroxy-2,5-dimethyl-3(2H)-furanone and
4. a yeast extract or a yeast autolysate or a protein hydrolysate or any combination thereof.

The composition preferably comprises (based on the total weight of the composition):
1. between 5 and 90 wt% of the composition comprising the three compounds (reducing sugar/cysteine/4-hydroxy-2,5-dimethyl-3(2H)-furanone) with the concentration ranges as defined hereinbefore; and
2. between 10 and 95 wt% of the yeast extract or yeast autolysate or protein hydrolysate or any combination thereof.

The weight percentage of the reducing sugar is defined herein as the weight of glucose (dextrose), i.e. not on any hydrates thereof. The weight percentage cysteine is defined herein as the weight of the L-cysteine free base, i.e. not on any (hydrated) salt of L-cysteine.

Preferably, the composition comprising the at least four compounds comprises between 10 and 95 wt% of the yeast extract or yeast autolysate or protein hydrolysate or any combination thereof, based on the total weight of the composition. More preferably, the composition comprises between 30 and 90 wt%, even more preferably between 40 and 85 wt% and most preferably between 50 and 80 wt% the yeast extract or yeast autolysate or protein hydrolysate or any combination thereof based on the total weight of the composition.

The composition used in the process of the invention preferably comprises a low amount of water. The water in the composition may be derived from any of the components present in the composition: the reducing sugar, cysteine, 4-hydroxy-2,5-dimethyl-3(2H)-furanone and/or the yeast extract or the yeast autolysate or the combination of yeast extract and yeast autolysate. In addition, water may be added to the composition. For instance, between 1 and 10 wt% water may be added to the composition based on the total weight of the composition, more preferably between 1 and 9 wt%, more preferably between 1 and 8 wt%, more preferably between 1 and 7 wt%, more preferably between 1 and 6 wt%, most preferably between more preferably between 1 and 5 wt% based on the total weight of the composition. The water content of the composition may be important for obtaining the desired flavour type as well as the desired concentration of the flavour. When the water content of the composition is too high, e.g. more than 10%, the concentration of the vegetable flavour may be too low, or the throughput in the extruder may slow down or stop. When the water content is too low, e.g. less than 1%, burnt-off notes may occur.

The composition used in the process of the invention is heated and extruded at a temperature between 80°C and 140°C in an extruder. The extruder may be any type of extruder suitable for the production of process flavours such as a twin screw extruder. Extruders, such as twin screw extruders, are known in the art. For instance, a suitable extruder is a twin-screw extruder, equipped with several feeders and injectors. The composition of the invention as defined hereinbefore and optionally water may be introduced into the extruder through the same or separate feeders. The product may leave the extruder at a pressure, outside the extruder, varying from reduced pressure (e.g. 5 mbar) to atmospheric pressure (e.g. approximately 1 bar). The extruded product may be further cooled and/or dried using a cooling belt or any other method known in the art. Extrusion may result in a uniform or nearly uniform distribution of the components over the composition, resulting in a homogenous product. A homogenous product may be advantageous since the flavour may be evenly spread over the food or feed. Due to the elevated temperature and/or pressure deployed in an extruder the components of composition may turn into a so-called "melt".

For the production of the boiled beef flavour, the temperature applied during the extrusion step is between 80°C and 140°C, preferably 90-140°C, more preferably between 90-135°C, more preferably between 100-135°C, more preferably between 100-130°C, more preferably between 110-130°C more preferably between 115-130°C more preferably between 120-130°C and most preferred between 125-130°C. At temperatures below 80°C, the desired flavour development during extrusion becomes very slow and therefore there is a greater risk at the development of undesired off-flavours. At temperature higher than 140°C there is a risk that the flavour type becomes more roast, fried or grilled instead of the desired boiled beef flavour.

The extrusion time, i.e. the average residence time of the composition in the extruder is between in general dependent on the temperature during extrusion. The person skilled in the art can determine the rage residence time of the composition in the extruder without undue burden by varying the temperature and determining the flavour type and concentration resulting from the extrusion process. For instance, the time may be varied between 1 second and 60 minutes. In order to obtain the desired boiled beef flavour, shorter times must be used at higher temperatures and vice versa. From operational aspect, average residence time of the composition in the extruder between 5 seconds and 30 minutes, more preferably between 10 seconds and 10 minutes, most preferably between 30 seconds and 5 minutes are preferred.

In general, without undue burden, the temperature, residence time and water content of the composition during extrusion may be varied in order to determine the optimal conditions for the desired flavour type and concentration.

In a preferred embodiment of the process of the invention, neutral oil may be added to the composition or added via a separate feeder to the extruder. The product of the process of the first aspect of the invention (i.e. the product having boiled beef flavour) may be in any form. For example, the product may be in dry or in liquid formulation. The product, when in a dry formulation, may be friable, i.e. it may easily reduce to or give off powder or dust. Dust is generally considered to be hazardous to the health of humans and animals. Adding oil to the composition may render the product less friable and thereby prevents it to give off dust or powder. In a preferred embodiment the oil is hydrogenated sunflower oil. The amount of neutral oil in the composition is preferably between 0.1% and 5% wt%, preferably between 0.2% and 2% wt% and more preferably between 0.5% and 1% wt% based on the total weight of the composition.

In a second aspect, the invention provides a boiled beef flavour obtainable by the process of the invention. The boiled beef flavour made by the extrusion process according to the first aspect of the invention is marked by a very high homogeneity of the final product as well as a high stability of the boiled beef flavour.

In a third aspect the invention provides a seasoning comprising the boiled beef flavour of the second aspect of the invention. A seasoning is a mixture of food or feed ingredients, usually consisting of herbs and salt, to be added to food or feed to impart or enhance flavour. The seasoning is preferably a food or feed seasoning. Preferably, the amount of the boiled beef flavour of the invention in the seasoning is between 0.5 and 10wt%, more preferably between 1 and 5 wt%, most preferably between 2 and 4 wt% based on the total weight of the seasoning.

In a fourth aspect the invention provides food or feed comprising the boiled beef flavour of the invention. Preferably, the amount of boiled beef flavour of the invention is between 0.01 and 5wt%, more preferably between 0.05 and 1 wt%, most preferably between 0.1 and 0.5 wt% based on the total weight of the food or feed.

In a fifth aspect the invention provides the use of the boiled beef flavour of the invention or the seasoning of the invention to impart or enhance boiled beef flavour in food or feed. The boiled beef flavour of the invention or the seasoning of the invention may be used for flavouring food products like soups, beef, pasta, crisps, snacks, vegetables etc. The boiled beef flavour of the invention or the seasoning of the invention may be added to the food or feed in the process of preparation (e.g. in the kitchen) or when the food or feed is ready for consumption, e.g. on the table. The boiled beef flavour of the invention or the seasoning of the invention may already be effective in diluted concentrations and may therefore be used in a cost-effective manner in the application. By varying the amount of boiled beef flavour of the invention or the seasoning of the invention in the food or feed the skilled person may, without undue burden, establish suitable amounts of boiled beef flavour in order to enhance or impart a suitable boiled beef flavour. The boiled beef flavour of the invention is preferably added to food or feed in an amount to arrive at a final concentration between 0.01% and 5wt%, preferably between 0.05 and 1wt%, more preferably between 0.1 and 0.5wt% based on the total weight of the food or feed.

### MATERIALS AND METHODS

The yeast extract used in the examples was Gistex^{®} LSX as can be obtained from DSM Food Specialties B.V., Delft, The Netherlands.

The 4-hydroxy-2,5-dimethyl-3(2H)-furanone powder used in the examples was purchased from Sigma-Aldrich, Product code W317403.

### EXAMPLES

### Example 1

### Production of a boiled beef flavour

Compositions A-G as depicted in Table 1 were prepared and heated and extruded in a twin-screw extruder. The temperature of the composition in the extruder was 127°C and the reaction time approximately 3 minutes. After extrusion, the compositions A-G were dissolved at a final concentration of 0.02 wt% in a solution comprising 2 wt% of the mixture depicted in Table 1 in hot water and subsequently tasted by an expert tasting panel consisting of 6 assessors.

**Table 1**

| Ingredient | wt% |
|---|---|
| Salt | 20,0 |
| Maltodextrin | 42,7 |
| Vegetable fat powder | 14,0 |
| Modified starch | 8,5 |
| Gistex X2 | 5,0 |
| Maxarome Select | 2,5 |
| Onion powder | 2,0 |
| Turmeric powder | 0,15 |
| Sugar | 3,5 |
| Caramel powder | 0,9 |
| Garlic powder | 0,3 |
| White pepper | 0,2 |
| Citric acid | 0,15 |
| Nutmeg | 0,08 |
| Laurel | 0,03 |
| Total | 100,0 |

**Table 2**

| Compound | Composition (compounds in wt% of the composition) | | | | | | |
|---|---|---|---|---|---|---|---|
| | A | B | C | D | E | F | G |
| Dextrose monohydrate | 100 | - | - | 67 | 97 | - | 65 |
| L-cysteine | - | 100 | - | 33 | - | 97 | 32 |
| 4-hydroxy-2,5-dimethyl-3(2H)-furanone powder | - | - | 100 | - | 3 | 3 | 3 |
| Boiled beef intensity | 0 | 0 | 0 | 0 | 0 | 0 | ± |
| Boiled beef character | none | none | none | Weak general boiled chicken | none | none | Weak general boiled beef |

The results in Table 2 show that only composition G, comprising the three compounds reducing sugar, cysteine and 4-hydroxy-2,5-dimethyl-3(2H)-furanone, gave a boiled beef flavour, while the compounds alone or in combination of two, did not give a boiled beef flavour. The wt% in Table 1 indicate the concentration of the respective compound in the composition, for instance 100 gram of composition G contains 65 gram dextrose monohydrate (65 wt%), 32 gram of L-cysteine (32 wt%) and 3 gram 4-hydroxy-2,5-dimethyl-3(2H)-furanone powder (3 wt%).

### Example 2

### Production of a boiled beef flavour

Composition G was prepared as described in Example 1. Compositions H and J as depicted in Table 3 were prepared and heated and extruded in a twin-screw extruder. The temperature of the composition in the extruder was 118°C and the reaction time approximately 2 minutes. After extrusion, the compositions H and J were dissolved at a final concentration of 0.2 wt% in water and subsequently tasted by an expert tasting panel.

**Table 3**

| Compound | Composition (compounds in wt% of the composition) | | |
|---|---|---|---|
| | G | H | J |
| Dextrose monohydrate | 65 | 11,1 | 11,2 |
| L-cysteine (which form) | 32 | 6,1 | 6,2 |
| 4-hydroxy-2,5-dimethyl-3(2H)-furanone | 3 | 0,4 | - |
| Yeast Extract Maxarome Plus LS | - | 82,4 | 82,6 |
| Boiled beef intensity | ± | ++ | + |
| Boiled beef character | Weak general boiled beef | Boiled beef | Slightly boiled beef |

The results in Table 3 show that composition H, comprising the three compounds reducing sugar, cysteine and 4-hydroxy-2,5-dimethyl-3(2H)-furanone as well as yeast extract, gave the strongest boiled beef flavours. Whereas composition H has only -1/6 of the 3 components reducing sugar, cysteine and 4-hydroxy-2,5-dimethyl-3(2H)-furanone of composition G, the added yeast extract in the compositions result in even improved boiled beef flavours compared to composition G alone. Composition J shows that omitting 4-hydroxy-2,5-dimethyl-3(2H)-furanone gives less boiled beef flavour compared to composition H.

## Claims

1. A process for the production of a boiled beef flavour comprising heating a composition comprising a reducing sugar and cysteine and 4-hydroxy-2,5-dimethyl-3(2H)-furanone **characterized in that** the composition is heated and extruded in an extruder at a temperature between 80°C and 140°C.

2. A process according to claim 1 wherein the composition further comprises yeast extract or yeast autolysate, a protein hydrolysate or any combination thereof.

3. A process according any of the preceding claims wherein the composition further comprises water.

4. A process according to any of the preceding claims wherein the boiled beef flavour is leaving the extruder at a pressure, outside the extruder, varying from reduced pressure to atmospheric pressure to give the extruded product.

5. A process according to claim 4 wherein the extruded product may be further cooled and/or dried.

6. A boiled beef flavour obtainable by the process of any of claims 1-5

7. A seasoning comprising the boiled beef flavour of claim 6.

8. Seasoning according to claim 7 wherein the amount of boiled beef flavour is between 0.5 and 10 wt% based on the total weight of the seasoning.

9. Food or feed comprising the boiled beef flavour of claim 6 or the seasoning of claim 7 or 8.

10. Food or feed according to claim 9 wherein the amount of boiled beef flavour is between 0.01 and 5 wt% based on the total weight of the food or feed.

11. Use of the boiled beef flavour of claim 6 or the seasoning of claim 7 or 8 to impart or enhance the boiled beef flavour in food or feed.

12. Use according to claim 11 wherein the boiled beef flavour is added to the food or feed in an amount to arrive at a final concentration between 0.01% and 5 wt% based on the total weight of the food or feed.

## Patentansprüche

1. Verfahren zum Herstellen eines Aromas von gekochtem Rindfleisch, umfassend Erhitzen einer Zusammensetzung umfassend einen reduzierenden Zucker und Cystein und 4-Hydroxy-2,5-dimethyl-3(2H)-furanon, **dadurch gekennzeichnet, dass** die Zusammensetzung in einem Extruder erhitzt und bei einer Temperatur zwischen 80 °C und 140 °C extrudiert wird.

2. Verfahren gemäß Anspruch 1, wobei die Zusammensetzung ferner Hefeextrakt oder Hefeautolysat, ein Proteinhydrolysat oder eine beliebige Kombination davon umfasst.

3. Verfahren gemäß einem der vorstehenden Ansprüche, wobei die Zusammensetzung ferner Wasser umfasst.

4. Verfahren gemäß einem der vorstehenden Ansprüche, wobei das Aroma von gekochtem Rindfleisch den Extruder bei einem Druck außerhalb des Extruders verlässt, der von verringertem Druck bis atmosphärischem Druck variiert, um das extrudierte Produkt zu ergeben.

5. Verfahren gemäß Anspruch 4, wobei das extrudierte Produkt ferner gekühlt und/oder getrocknet werden kann.

6. Aroma von gekochtem Rindfleisch, erhältlich durch das Verfahren gemäß einem der Ansprüche 1-5.

7. Würzmittel, umfassend das Aroma von gekochtem Rindfleisch gemäß Anspruch 6.

8. Würzmittel gemäß Anspruch 7, wobei die Menge an Aroma von gekochtem Rindfleisch zwischen 0,5 und 10 Gew.-%, bezogen auf das Gesamtgewicht des Würzmittels, beträgt.

9. Lebensmittel oder Futtermittel, umfassend das Aroma von gekochtem Rindfleisch gemäß Anspruch 6 oder das Würzmittel gemäß Anspruch 7 oder 8.

10. Lebensmittel oder Futtermittel gemäß Anspruch 9, wobei die Menge an Aroma von gekochtem Rindfleisch zwischen 0,01 und 5 Gew.-%, bezogen auf das Gesamtgewicht des Lebensmittels oder Futtermittels, beträgt.

11. Verwendung des Aromas von gekochtem Rindfleisch gemäß Anspruch 6 oder des Würzmittels gemäß Anspruch 7 oder 8 zum Verleihen von Aroma oder Verstärken des Aromas von gekochtem Rindfleisch in Lebensmittel oder Futtermittel.

12. Verwendung gemäß Anspruch 11, wobei das Aroma von gekochtem Rindfleisch zu dem Lebensmittel oder Futtermittel in einer Menge zugegeben wird, um eine Endkonzentration zwischen 0,01 Gew.-% und 5 Gew.-%, bezogen auf das Gesamtgewicht des Lebensmittels oder Futtermittels, zu erhalten.

## Revendications

1. Procédé de production d'un arôme de boeuf bouilli, comprenant le chauffage d'une composition comprenant un sucre réducteur et de la cystéine et de la 4-hydroxy-2,5-diméthyl-3(2H)-furanone, **caractérisé en ce que** la composition est chauffée et extrudée dans une extrudeuse à une température comprise entre 80°C et 140°C.

2. Procédé selon la revendication 1, dans lequel la composition comprend en outre un extrait de levure ou un autolysat de levure, un hydrolysat de protéine, ou une combinaison quelconque de ceux-ci.

3. Procédé selon l'une quelconque des revendications précédentes, dans lequel la composition comprend en outre de l'eau.

4. Procédé selon l'une quelconque des revendications précédentes, dans lequel l'arôme de boeuf bouilli quitte l'extrudeuse à une pression, hors de l'extrudeuse, variant d'une pression réduite à la pression atmosphérique afin de donner le produit extrudé.

5. Procédé selon la revendication 4, dans lequel le produit extrudé peut être davantage refroidi et/ou séché.

6. Arôme de boeuf bouilli pouvant être obtenu par le procédé selon l'une quelconque des revendications 1-5.

7. Assaisonnement comprenant l'arôme de boeuf bouilli selon la revendication 6.

8. Assaisonnement selon la revendication 7, dans lequel la quantité d'arôme de boeuf bouilli se trouve entre 0,5 et 10% en poids, sur la base du poids total de l'assaisonnement.

9. Aliment pour l'alimentation humaine ou animale, comprenant l'arôme de boeuf bouilli selon la revendication 6 ou l'assaisonnement selon la revendication 7 ou 8.

10. Aliment pour l'alimentation humaine ou animale selon la revendication 9, dans lequel la quantité d'arôme de boeuf bouilli se trouve entre 0,01 et 5% en poids, sur la base du poids total de l'aliment pour l'alimentation humaine ou animale.

11. Utilisation de l'arôme de boeuf bouilli selon la revendication 6 ou de l'assaisonnement selon la revendication 7 ou 8, afin de conférer ou améliorer l'arôme de boeuf bouilli dans un aliment pour l'alimentation humaine ou animale.

12. Utilisation selon la revendication 11, dans laquelle l'arôme de boeuf bouilli est ajouté à l'aliment pour l'alimentation humaine ou animale selon une quantité pour conduire à une concentration finale comprise entre 0,01% et 5% en poids, sur la base du poids total de l'aliment pour l'alimentation humaine ou animale.
